# EUROPEAN PATENT APPLICATION

(11) **EP 1 376 425 A1**
(43) Date of publication of application: **02.01.2004**
(21) Application number: 02705464.2
(22) Date of filing: 22.03.2002
(51) Int. Cl.: G06F 17/60

(54) **CHARGING DEVICE, CHARGING METHOD, TRANSACTION SUPPORTING DEVICE, AND TRANSACTION SUPPORTING METHOD**

(30) Priority: 26.03.2001 JP 2001087862
(71) Applicant: Dojo, Makoto, Minato-ku, Tokyo 108-0022 (JP)
(72) Inventor: DOJO, Makoto, Minato-ku, Tokyo 108-0022 (JP); DOJO, Kenshin, Shinagawa-ku, Tokyo 140-0001 (JP); TSUJIOKA, Hayato, Hikone-shi, Shiga 522-0008 (JP); NOMURA, Naoyuki, Kita-ku, Tokyo 114-0003 (JP)
(74) Representative: Jenkins, Peter David
(86) International application number: PCT/JP2002/002815
(87) International publication number: WO 2002/077888

(57) **Abstract**

Fee-charge processing performed by providers of software used to complete commercial transactions or devices in which such software is installed for persons provided with such software or devices in accordance with records of utilization, etc. A fee-charge processing device which can communicate with a transaction supporting device used to support completion of transactions that involve goods or services is designed so that transaction information, from which at least transaction content information indicating the concrete transaction contents of transactions using the transaction supporting device has been removed, is received from the transaction supporting device and stored in memory, and fee-charge information including the amount of the fee that is to be charged is produced based upon the transaction information that has been stored in memory.

## Description

### Technical Field

The present invention relates to a fee-charge processing device and method which are used to charge fees for the use of a transaction supporting device used to support various types of transactions, and a transaction supporting device and method capable of communicating with this fee-charge processing device.

### B ackground Art

As a result of the rapid development of computer technology, computers have been introduced into commercial transactions conventionally accomplished in person. Furthermore, as a result of the spread of communications systems as represented by the internet, systems that might be referred to as cyber-auctions or cyber competitive selling (buying) systems that utilize the informational properties and real-time properties of the internet have recently begun to attract attention.

In the past, software used to operate computer devices has ordinarily been purchased by the person using the software. Recently, however, a method which is designed so that computers are operated not by purchasing software, but rather by receiving software via the internet, etc. from an application service provider (ASP) has appeared on the scene. If such an ASP is utilized, the user does not need to perform the bothersome work of maintaining software or frequent upgrading of software versions, etc.; accordingly, savings can be made in terms of time and costs (including personnel expenditures). As a result, such a method has attracted attention. Furthermore, since the development of software involves considerable time and cost, it is difficult for the user himself to develop software. Accordingly, computers are operated with some or all of the software received not just from an ASP but also from software developers, so that business operations suited to respective purposes are carried on.

Persons who thus utilize software and computer devices in which such software is installed, i.e., persons who are provided with software and computer devices, are charged a use fee based upon a license agreement such as a proportional agreement corresponding to the actual record of utilization of the software or computer, or a fixed-fee agreement, etc.

Especially in cases where software provided by an ASP or other system (this may be some software or all software) or computers in which such software is installed are used in commercial transactions which are frequently conducted on an everyday basis as described above, the question of how to charge a fee from the user becomes a problem. For example, the detailed reporting by the user of information for which a fee is to be charged (as a result of a transaction) to the provider is bothersome, and it is also bothersome for the provider to prepare invoices for the amounts that are to be charged from such reported information. Especially in cases where there are numerous receivers of services such bothersome work is increased for the provider, and there may also be problems in terms of checking to ascertain whether or not reported information has been unfairly altered by the users.

### Disclosure of Invention

Accordingly, the present invention makes it possible to realize, in an ideal manner, fee-charge processing which is performed by the provider of software used to complete commercial transactions or devices in which such software is installed for persons provided with such software or devices, in accordance with the record of utilization or the like of such software or devices.

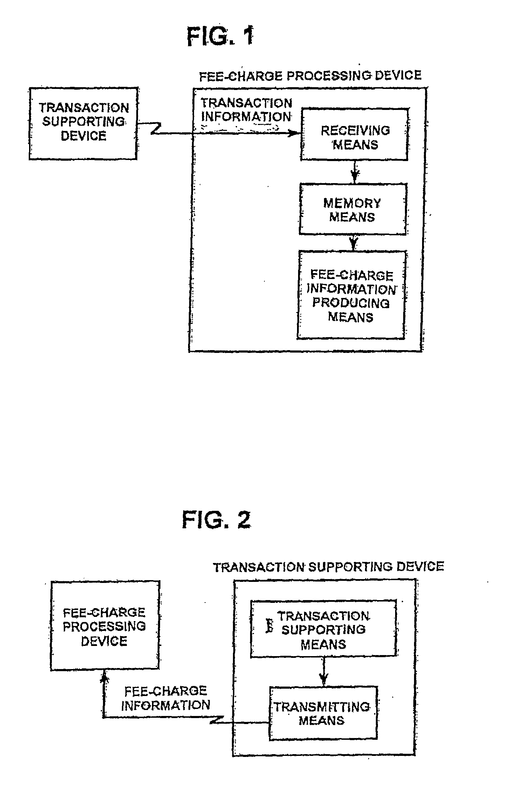

More specifically, the present invention allows communications with a transaction supporting device used to support completion of transactions involving goods or services, and it is characterized by the fact that transaction information from which at least transaction content information indicative of the concrete transaction content in the transactions using the transaction supporting device has been excluded is received from the transaction supporting device and stored in memory, and fee-charge information including the amount of the fee that is to be charged is produced based upon this stored transaction information. Accordingly, in cases where the present invention is realized as a fee-charge processing device, this fee-charge processing device comprises a receiving means for receiving transaction information, a memory means for storing the received transaction information, and a fee-charge information producing means for producing fee-charge information based upon the stored transaction information, as shown in Figure 1.

Here, from the standpoint of persons utilizing the transaction supporting device, such as transaction brokers, etc., it is conceivable that information unrelated to the payment of a fee based on the utilization of the transaction supporting device, e.g., "concrete contents of the transactions" actually conducted, such as names and addresses of customers conducting transactions, transaction prices for individual customers, and the concrete contents of goods or services involved in transactions, would be desired to remain undisclosed to outside parties. On the other hand, from the standpoint of persons charging utilization fees for the transaction supporting device from the above-described transaction brokers, etc., the charge of utilization fees can be sufficiently accomplished from other information relating to the transactions, even if such "concrete contents of the transactions" are not known. Accordingly, the present invention is designed so that only transaction information that is necessary for the charge of fees is received, and so that fee-charge information including the amounts of fees to be charged is produced based upon this transaction information. Consequently, there is no need for transaction brokers or the like to divulge to outside parties information that these brokers desire to keep confidential, and fee-charge can be appropriately accomplished by the persons charging fees from these transaction brokers or the like obtaining only the minimum necessary information. Furthermore, it is also possible to design the system so that transaction information is automatically transmitted from the transaction supporting device in order to prevent unfair practices such as alteration of the transaction information by the transaction brokers or the like in order to achieve a dishonest reduction in the amount of the fee charged before the transaction information is received from the transaction supporting device.

Especially in cases where there are a plurality of transaction supporting devices, it is conceivable that agreements may be concluded so that fees are charged under different conditions for each transaction supporting device or for each transaction broker using the transaction supporting devices. Accordingly, in order to perform fee-charge processing smoothly in such cases, it is desirable to devise the system so that fee-charge information that is peculiar to the transaction supporting device in question is produced in accordance with the transaction conditions in the transaction supporting device when fee-charge information is produced. Furthermore, there may be cases in which there is a single transaction supporting device for one transaction broker, and cases in which there is a plurality of transaction supporting devices for one transaction broker.

Furthermore, since the amount of the fee that is to be charged must be billed to the user of the transaction supporting device such as a transaction broker or the like based upon the fee-charge information that is produced, it is desirable that the fee-charge information that is produced be output. Here the term "output" includes "output" in general which may have various configurations such as the screen display of fee-charge information on the display of the fee-charge processing device of the present invention, the printing of such information as invoices on paper from a printer, or the transmission of fee-charge information to an information processing device or various other types of devices such as computers or facsimile devices, etc. used by transaction brokers, etc.

Furthermore, in order to ensure the reception of fee-charge information, it is desirable to devise the system so that the transaction information is received by a predetermined deadline or for a predetermined period. Here, the terms "predetermined deadline" and "predetermined period" includes various types of deadlines or periods, such as a deadline that is determined beforehand by agreement, once for every transaction or plurality of transactions (two or more transactions) conducted in the transaction supporting device, or once every day, week, month, etc.

Information which is suitable as "transaction information from which concrete transaction contents have been excluded" for producing fee-charge information includes at least one type of information such as the number of participants in transactions conducted by means of the transaction supporting device, participation fees, number of transactions, number of transactions successfully concluded, and monetary amounts involved in transactions successfully concluded.

In recent years, in addition to ordinary auction systems in which a plurality of buyers utilize the internet to offer purchase prices for a single good or service, and the buyer who offers the highest price can purchase the good or service; reverse auction systems are known in which a plurality of sellers conversely use the internet to offer selling prices for those desiring to buy a single good or service, and the seller who offers the lowest price can sell the good or service; and in addition, various variations of such systems, such as bidding type systems which are designed so that the price information presented by others cannot be seen, etc. have been considered as the cyber-auction systems. A common point of all such systems (as might be expected from conventional commercial practices) is that transactions can only be completed when the respective prices submitted by sellers and buyers coincide (there may also be cases where a broker's fee is subtracted). In the case of such systems, however, in a single competitive selling (buying) transaction, buying and selling can be completed by only one combination of buyer and seller for a single good or service. Accordingly, the probability of a transaction being completed is extremely low, and in most cases, time and trouble are required in order to complete a transaction; e.g., buyers or sellers who were unable to bid successfully must search for another auction, etc., and re-enter this auction. Furthermore, such systems tend to lapse into excessive competition, so that sound commercial transactions cannot be maintained; moreover, in cases where (as in auctions) the initial price offered by buyers is driven upward until there is finally a successful bid, after which another good of the same type is again put up for auction and is successfully bought by another buyer at a lower price, the first buyer may have lingering feelings of dissatisfaction and unfairness. In such cases, it might be thought that the above-described problems could easily be solved by causing buying and selling transactions to be completed among a plurality of combinations of buyers and sellers in a single auction. However, in order to complete transactions by causing the prices offered by buyers and sellers to agree, it must be possible to alter the prices offered by the respective sellers or respective buyers, and in such cases, it is extremely difficult to establish a rule for determining the standards by which these prices can be matched in a manner that leaves no dissatisfaction in either the buyer or the seller

Accordingly, a transaction method, which overturns the common-sense view of conventional transactions that holds that a transaction can only be completed when the respective prices offered by the buyer and seller agree and which is designed so that a plurality of transactions can be completed in a single matching step by matching providers and consumers even though the prices offered by the providers and consumers do not agree, has been conceived. More specifically, in cases where the transaction supporting device works so as to match providers desiring to provide a plurality of goods or services, who have submitted provision prices, and consumers desiring to purchase these goods or services, who have submitted purchase prices, even when the prices submitted by these providers and consumers do not agree, then examples of information that is desirable as transaction information constituting a basis for the production of fee-charge information are at least one type of information such as the differences generated between provision prices and purchase prices submitted by providers and consumers who have been matched by the transaction supporting device, in addition to the above-described number of participants in transactions conducted by means of the transaction supporting device, participation fees, number of transactions, number of transactions successfully concluded, and monetary amounts involved in transactions successfully concluded.

Furthermore, the cyber-auction systems using the present invention are not limited to systems that utilizes a transaction supporting device which performs matching without causing agreement of prices submitted by sellers and buyers as described above; and the transaction supporting device can be a device that uses an existing auction system. Moreover, the form of commercial transactions in the transaction supporting device of the present invention is not limited to a certain fixed form; and the present invention can be broadly applied to systems that uses computers as transaction supporting devices.

Meanwhile, the transaction supporting device of the present invention that allows communications with the above-described fee-charge processing device is constructed so that the completion of transactions involving goods or services is supported and further so that transaction information from which at least transaction content information indicative of the concrete transaction contents in the transactions thus completed has been excluded is transmitted. Accordingly, transaction brokers or the like can fairly communicate only information relating to the utilization fee of the transaction supporting device, and can pay the proper fee, without revealing detailed information concerning their own customers, etc. As a means for realizing such a construction, the transaction supporting device of the present invention includes a transaction supporting means and a transmitting means for transmitting transaction information to the fee-charge processing device, as shown in Figure 2.

Furthermore, information that is desirable as the above-described transaction information includes at least one type of information such as the number of participants in transactions conducted by means of the transaction supporting device, participation fees, number of transactions, number of transactions successfully concluded, and monetary amounts involved in transactions successfully concluded, as was described above.

A device, which can be cited as an example of a device which is useful as a transaction supporting device constructed so that transactions can be completed for a plurality of goods or services even if the prices on the provision side and purchasing side do not agree and which can transmit fair transaction information, is the device wherein while providers desiring to provide a plurality of goods or services, who have submitted provision prices, and consumers desiring to purchase these goods or services, who have submitted purchase prices, are matched even if the prices submitted by the providers and consumers do not agree, processing for completing transactions between the matched providers and consumers at the prices submitted is performed, an at least one type of information such as the differences generated between provision prices and purchase prices submitted by providers and consumers who have been matched by the transaction supporting device, the number of participants in transactions conducted by means of the transaction supporting device, participation fees, number of transactions, number of transactions successfully concluded, and monetary amounts involved in transactions successfully concluded, is included as transaction information.

Furthermore, in order to realize the processing performed above smoothly and without stress, it is desirable that the transaction supporting device be arranged so that the above-described transaction information is transmitted by a predetermined deadline or for a predetermined period.

### Brief Description of the Drawings

Figure 1 is an overall structural diagram of the present invention.
Figure 2 is another overall structural diagram of the present invention.
Figure 3 is an overall structural diagram of the system in one embodiment of the present invention.
Figure 4 is a system structural diagram of respective computers in the embodiment.
Figure 5 is a function block diagram that shows the server computer in the embodiment.

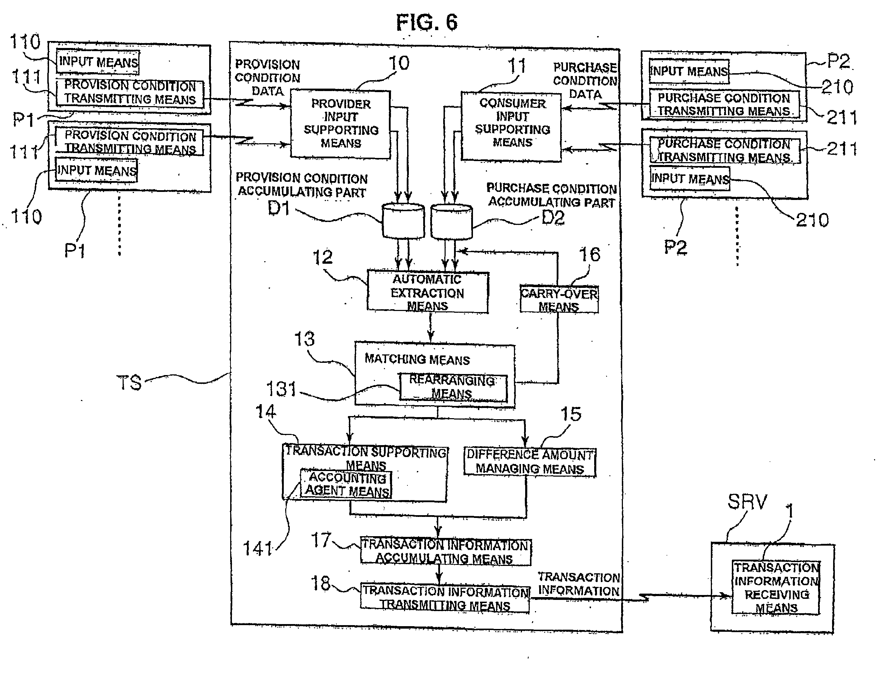

Figure 6 is a function block diagram that shows the transaction supporting server computer in the embodiment.
Figure 7 is an explanatory diagram that shows one example of transaction information in the embodiment.
Figure 8 is a flow chart that shows the operation of the transaction supporting server computer in the embodiment.
Figure 9 is a flow chart that shows the operation of the matching means in the transaction supporting server computer in the embodiment.
Figure 10 is an explanatory diagram that shows an example of the flow of the determination of commercial transactions in the embodiment.
Figure 11 is an explanatory diagram that shows an example of the flow of the determination of commercial transactions in the embodiment.
Figure 12 is an explanatory diagram that shows an example of the flow of the determination of commercial transactions in the embodiment.
Figure 13 is an explanatory diagram that shows an example of the flow of the determination of commercial transactions in the embodiment.
Figure 14 is a flow chart that shows the operation of the server computer in the embodiment.
Figure 15 is a flow chart that shows one example of the operation of the fee-charge information producing means in the server computer in the embodiment.
Figure 16 is a flow chart that shows one example of the operation of the fee-charge information producing means in the server computer in the embodiment.

### Best Mode For Carrying Out the Invention

Below, one embodiment of the present invention will be described with reference to the accompanying drawings.

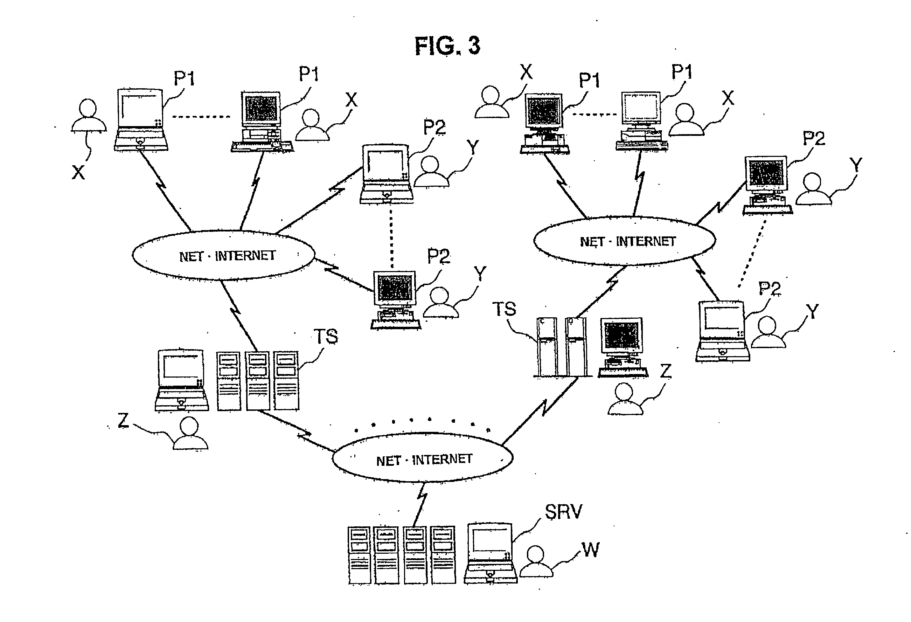

As shown in Figure 3, the transaction supporting device in this embodiment is a transaction supporting server computer TS which is connected via a communications circuit such as the internet NET, etc., with terminal computers P1 and P2 that are respectively disposed on the side of a provider X of goods and services in commercial transactions, and on the side of a consumer Y of these goods and services, and which is used to support and promote commercial transactions in general. This transaction supporting device forms a computer system on a network together with the terminal computers P1 and P2. Furthermore, the fee-charge processing device in the shown embodiment is a server computer SRV which is connected to the transaction supporting server computer TS via a communications circuit such as the internet NET, etc. and which is used to perform fee-charge processing based upon the utilization of the transaction supporting server computer TS.

Here, transactions between the provider X and the consumer Y are performed by the operator of the computer system (hereafter referred to as the "transaction broker Z") via the transaction supporting server computer TS. Furthermore, all or part of the software programs used to operate the transaction supporting server computer TS, or the transaction supporting server computer TS itself containing these programs, are provided to the transaction broker Z by a manager W using the server computer SRV. The form of this provision can be a form other than outright purchase by the transaction broker Z, e.g., rental or leasing, etc. and can differ for each transaction broker Z.

The "provider X" and "consumer Y" refer to persons (among an unspecified large number of business persons) who are registered as persons who can conduct transactions utilizing the computer system. Registration is performed using a predetermined registration supporting means (not shown). These registration supporting means are installed in the transaction supporting server computer TS. In cases where, for example, one of the unspecified business persons accesses the transaction supporting server computer TS by on-line access, the input of basic information for this business person is requested from the terminal computer P1 or P2, an ID serving as an identifier is issued for each business person, and the basic information is stored in memory in association with this ID. In the shown embodiment, the qualifications of the business persons are examined at the time of the registration in order to prevent any drop in the reliability or quality of the goods and services involved in transactions. In regard to the above-described ID, individual IDs may be acquired in company units, or in units of individual persons; such IDs may be acquired in various concrete forms. After the provider X and consumer Y have been registered, the IDs of the provider and consumer (as well as passwords ifnecessary) are input into the terminal computers P1 and P2, so that utilization of the present system is possible.

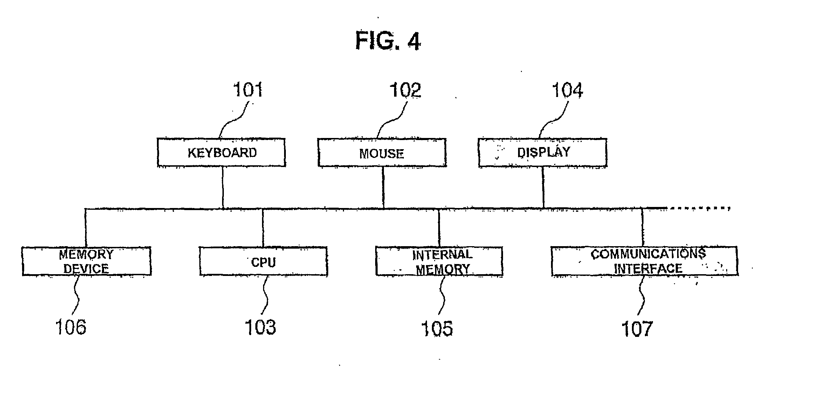

Next, the concrete construction of equipment in the shown embodiment will be described. The terminal computers P1 and P2 are a concept that includes so-called personal computers, facsimile devices, portable information processing terminals (PDAs), and telephones (including various types of portable telephones), etc. In the working of the present invention, these devices may also be used in combination; however, in the following description of the shown embodiment, a case in which the terminal computers P1 and P2 are personal computers will be described. Furthermore, the locations of these terminal computers P1 and P2 area not limited to domestic locations; the terminal computers may also be located overseas. As shown in Figure 4, each of these terminal computers comprises an input means such as a keyboard 101, mouse 102, etc., an output means such as a display 104, etc., a memory device 106 such as a hard drive, etc., a CPU 103, an internal memory 105, and a communications interface 107, etc. Furthermore, each computer has a web browser, etc.

Meanwhile, the transaction supporting server computer TS and the server computer SRV have a web server function and a data base function, etc. and have a device construction that is substantially similar to that of the terminal computers P1 and P2. The transaction supporting server computer TS and the server computer SRV may be concentrated in a single location, or may be dispersed. The locations of these computers are not limited to domestic locations, but may also be overseas.

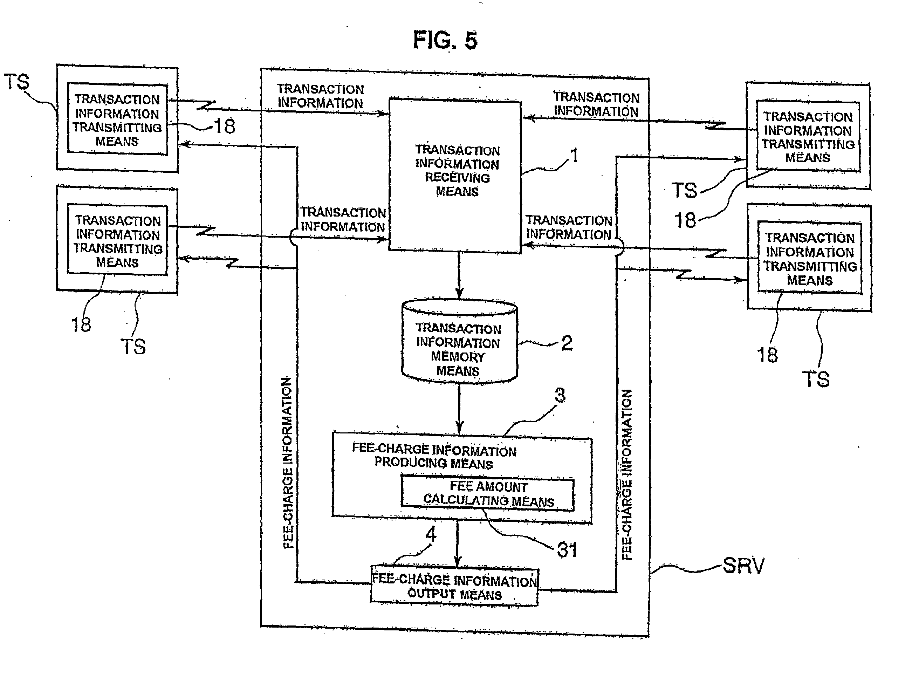

Furthermore, the server computer SRV in the shown embodiment is designed so that the CPU 103 and peripheral devices are operated in accordance with specific programs stored in the memory device 106, thus providing at least the functions of a transaction information receiving means 1, a transaction information memory means 2, a fee-charge information producing means 3 and a fee-charge information output means 4, as shown in Figure 5.

These respective means will be described now. The transaction information receiving means 1 is a means that receives transaction information transmitted from the transaction information transmitting means 18 of the transaction supporting server computer TS regarding transactions conducted by the transaction supporting server computer TS. In this transaction information receiving means 1, it is designed so that information that is automatically transmitted from the transaction supporting server computer TS by a deadline or for a period determined by agreement between the manager W and transaction broker Z is received. In the shown embodiment, the reception of transaction information is performed at a predetermined time each day. However, various alterations are possible; for example, information could be received on a monthly basis, or for each transaction processing performed by the transaction supporting server computer TS, etc. Furthermore, details of the transaction information will be described later.

The transaction information memory means 2 stores and accumulates transaction information received by the transaction information receiving means 1 in a transaction information accumulating part (not shown) set in the memory device 106 of the server computer SRV in individual association with each transaction supporting server computer TS or each transaction broker Z.

The fee-charge information producing means 3 comprises a fee amount calculating means 31 that tabulates the transaction information for each transaction supporting server computer TS accumulated in the transaction information memory means 2 for a predetermined period (e.g., one month or the like), and calculate the amounts of the fees that are to be charged for this period. The fee-charge information producing means 3 produces fee-charge information including the amounts of fees determined by the fee amount calculating means 31, and individual information for each transaction supporting server computer TS, etc. Furthermore, various other configurations can also be adopted. For example, in cases where transaction information is received at the rate of once a day, it is also possible to design so that respective sets of transaction information are stored in memory and accumulated, and the accumulated information is tabulated once a month so that fee-charge information is produced, and in cases where transaction information is received for each instance of transaction processing performed by the transaction supporting server computer TS, it is also possible to devise design so that fee amounts are calculated each time and accumulated, and the accumulated fee amounts are tabulated once a month so that fee-charge information is produced, etc. Furthermore, the fee-charge information that is produced is transmitted to the respective transaction supporting server computers TS by the fee-charge information output means 4 as data with a specific written format such as invoices, etc.

Meanwhile, the transaction supporting server computer TS is designed so that the CPU 103 and peripheral devices are operated in accordance with specific programs stored in the memory device 106, thus providing at least the functions of a provider input supporting means 10 constituting provision condition receiving means, a consumer input supporting means 11 constituting purchase condition receiving means, an automatic extraction means 12, a matching means 13, a transaction supporting means 14, a difference amount managing means 15, a carry-over means 16, a transaction information accumulating means 17 and a transaction information transmitting means 18, and so that providers X and consumers Y are combined by means of an auction type system. This transaction supporting server computer TS can be operated by installing the above-described programs provided off-line by the manager W, or programs downloaded on-line from the server computer SRV, etc. or can be designed so that dedicated programs installed in the server computer SRV, etc., that is the access destination can be utilized on-line at any time in a state in which the server computer SRV, etc. is accessed. Furthermore, the provider X and consumer Y need not necessarily install dedicated programs in their own terminal computers P1 and P2; it is also possible to devise the system so that (for example) common applications of browsers, etc. can be utilized.

The above-described means will be described below more concretely. First, the provider input supporting means 10 receives provision condition data transmitted from the terminal computer P1 on the provider side utilizing input means 110 (keyboard 101, etc.) and provision condition transmitting means 111 (communications interface 107, etc.) and then accumulates this data in a provision condition accumulating part D1 set in the memory device 106 of the transaction supporting server computer TS. Furthermore, the consumer input supporting means 11 receives purchase condition data transmitted from the terminal computer P2 on the consumer side utilizing input means 210 (keyboard 101, etc.) and purchase condition transmitting means 211 (communications interface 107, etc.) and accumulates this data in a purchase condition accumulating part D2 set in the memory device 106 of the transaction supporting server computer TS. Furthermore, it is also possible that the above-described respective types of condition data are received from the provider X or consumer Y via fax or mail and that the facility operator who has received this data inputs the data directly into the server computer SRV. The roles of the provider input supporting means 10 and consumer input supporting means 11 in this case include the input means (keyboard 101, etc.) of the transaction supporting server computer TS.

Here, the specific goods or services may in some cases be comprehensively designated by the minimum common name required in transactions, as for example "television"; in other cases, these goods or services may be designated more concretely with the insertion of a plurality of items, as in "Model 25 liquid crystal television manufactured by OO Co.".

However, in the transactions conducted in this transaction supporting server computer TS, the provision prices contained in the respective sets of provision condition data and the purchase prices contained in the respective sets of purchase condition data are disclosed only to the providers X and consumers Y who submitted these prices. Thus, the system is a closed system in which the providers X and consumers Y cannot ascertain individual condition information (not only for persons in the same business but even for transaction partners) at the time of condition input or following the completion of transactions. Thus, an operation which might be referred to as a double closed auction, in which provision condition data and purchase condition data are accumulated in the respective condition accumulating parts D1 and D2, and transactions are completed between the providers X and consumers Y who submitted the data, is automatically performed by a computer.

The automatic extraction means 12 extracts data indicating a desired provision period or desired purchasing period including a predetermined time and date for settlement among the provision condition data and purchase condition data in a limit time constituting this date and time for settlement. In the shown embodiment, this limit time is automatically updated at fixed intervals.

The matching means 13 compares provision condition data and purchase condition data extracted by the automatic extraction means 12 and combines providers X and consumers Y so that the provision prices and purchase prices are the same or so that the purchase price is higher than the provision price.

The transaction supporting means 14 provides support so that the selling and buying of specific goods or services are performed between providers X and consumers Y whose combinations have been determined by the matching means 13 in accordance with the respectively submitted provision prices and purchase prices.

The difference amount managing means 15 manages difference amounts generated by the selling and buying utilizing the transaction supporting means 14 in combinations combined by the matching means 13.

The carry-over means 16 automatically adds provision condition data and purchase condition data not successfully matched by the matching means 13 to the object of extraction by the automatic extraction means 12 until the desired deadline for matching desired by the providers X or consumers Y is exceeded.

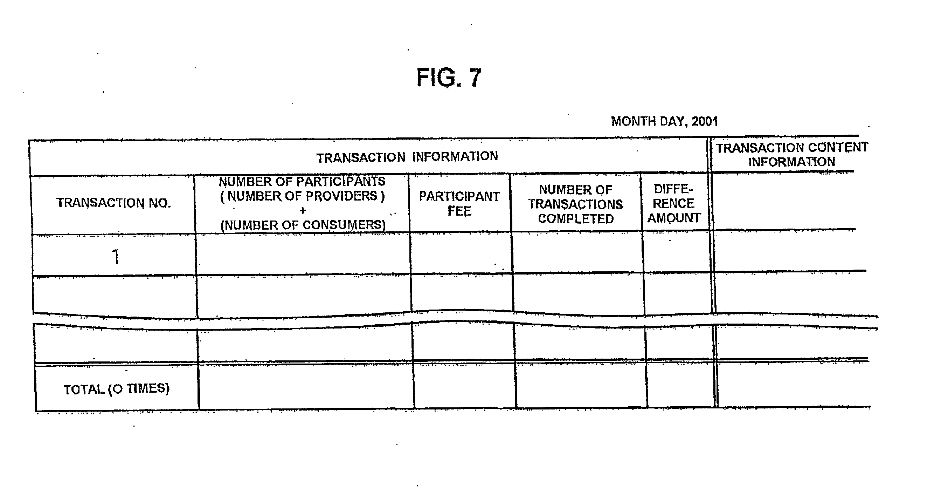

The transaction information accumulating means 17 is a means that stores and accumulates the number of participants in transactions via the transaction supporting server computer TS in a single matching performed by the matching means 13, participation fees paid by these participants, the number of transactions completed by the transaction supporting means 14, the monetary amount involved in the completed transactions, the above-described difference amounts managed by the difference amount managing means 15, the total number or total monetary amount of these difference amounts per day, and the number of transactions performed by the transaction supporting server computer TS per day, etc., as transaction information. In the shown embodiment, the "number of participants" refers to the respective numbers of providers X and consumers Y, or to the total number of these providers X and consumers Y; and the "participation fees" refer to the total amounts of the balances paid or to be paid by these participants (providers X and consumers Y) for participating in transactions. Furthermore, the "number of transactions" refers to number of times that matching is performed by the matching means 13. The "number of completed transactions" is basically the same as the number of combinations successfully matched by the matching means 13. In this transaction information accumulating means, detailed information such as the contents of good and services handled in the individual transactions, names, titles and addresses, etc. of providers X and consumers Y for whom transactions were completed, and transaction content information such as the monetary amounts bid by the respective providers X and consumers Y for whom transactions were completed, etc. can also be simultaneously stored and accumulated. Figure 7 shows, in a table, an example of transaction information and transaction content information stored by the transaction information accumulating means 17.

The transaction information transmitting means 18 is a means that automatically transmits the transaction information stored and accumulated by the transaction information accumulating means 17 to the server computer SRV by a predetermined deadline or for a predetermined period (in the shown embodiment, once a day following the completion of handling of transactions for that day). Here, the transaction content information is not contained in the transmitted transaction information, but at least one of the various other types of information described above is contained in this transmitted information. The information that is transmitted is determined by prior agreement between the manager W and transaction broker Z and is described in the program so that only this information is automatically transmitted. In the shown embodiment, furthermore, the various types of information described above are transmitted "as is" (as so-called raw date). However, this is done in order to facilitate maintenance such as program alterations, etc., in cases where the information that is to be transmitted is changed by agreement between the manager W and the transaction broker Z. In cases where this need not be considered, information obtained by subjecting the information to processing by means of specific calculation formulae (e.g., values obtained by multiplying the monetary amounts involved in completed transactions by a predetermined rate, etc.) may be transmitted as transaction information. The information transmitted as described above is received by the transaction information receiving means 1 in the server computer SRV.

Next, an example of the flow leading to fee-charge via the completion of a transaction for specific goods utilizing the shown embodiment constructed as described above will be described below briefly.

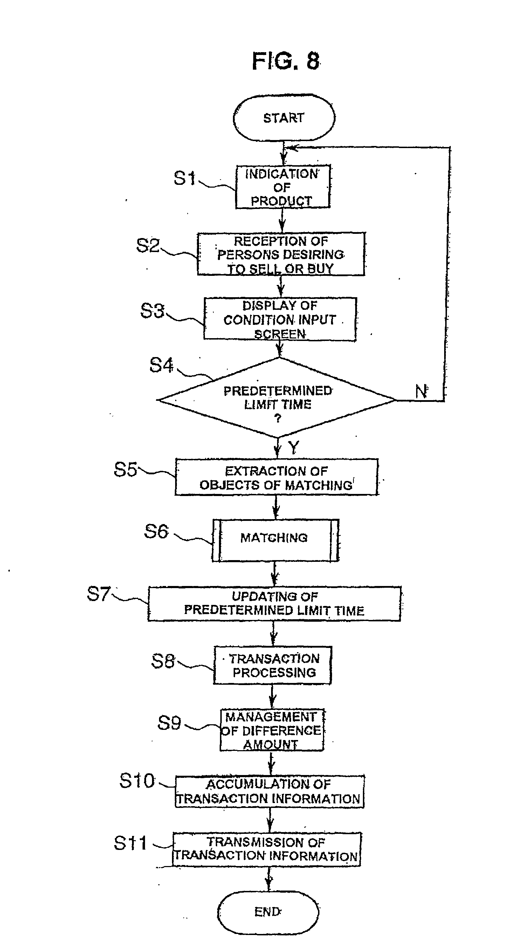

A provider X logs onto the transaction supporting server computer TS from his own terminal computer P1, and inputs provision conditions including the provision price and desired provision period for the product indicated (e.g., a personal computer) while viewing a provision condition input screen (not shown) displayed on the display of this terminal computer P1 (Figure 8, step S1 through step S3). Meanwhile, a consumer Y also similarly logs on from his own terminal computer P2, and inputs purchase conditions including the purchase price and desired purchasing period while viewing a purchase condition input screen (not shown) displayed on the display of this terminal computer P2 (Figure 8, step S1 through step S3). In this case, reference can be made to various types of information relating to the product, e.g., individual transaction settling prices and average prices in the past, using condition reference means not shown in the drawings. Furthermore, the desired provision period and the desired purchasing period are periods within which the completion of a transaction is settled, and these desired provision period and the desired purchasing period would include the period within which the product is actually shipped from the provider or the period within which the product is actually delivered to the consumer.

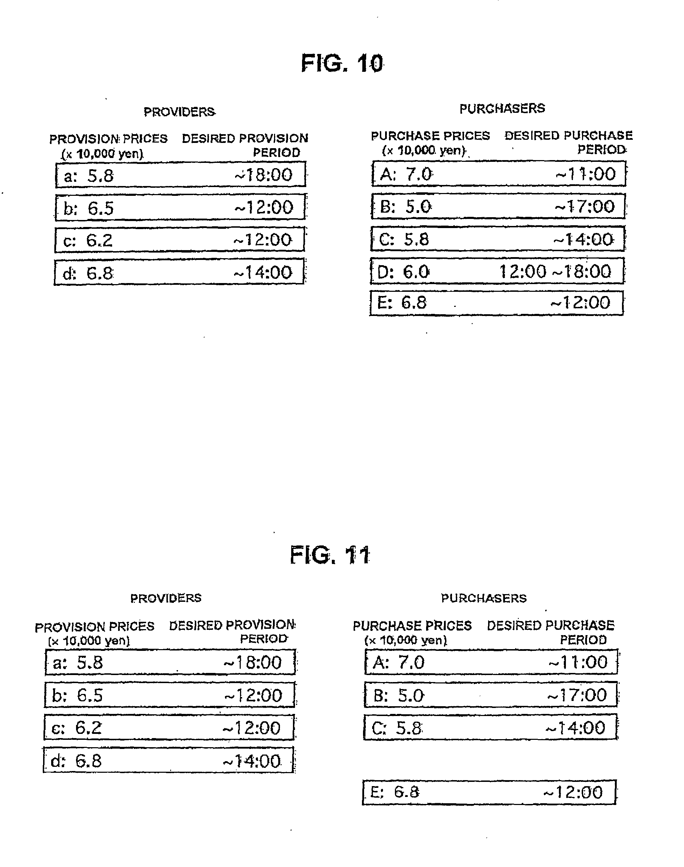

Here, to promote understanding, one example will be shown below. As shown in Figure 10, it is assumed that four sets of provision condition data a, b, c and d and five sets of purchase condition data A, B, C, D and E have been entered for a television which is the product in question. Among these sets of data A through E and a through d, those sets of data for which only the final time of the desired period is shown are sets of data in which only the desired deadline is limited.

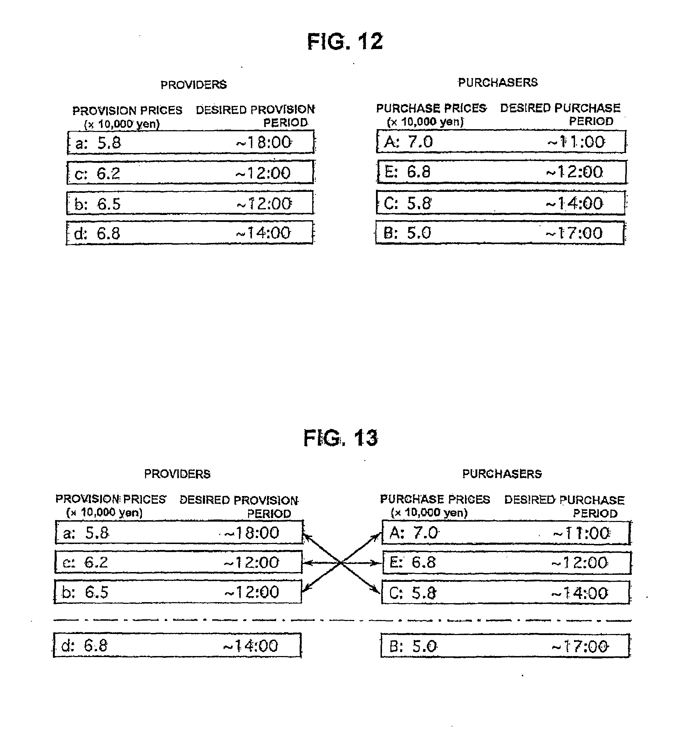

When the predetermined limit time (e.g., 11:00 AM) is reached, the provision condition data and purchase condition data indicating desired provision or purchasing periods that include this limit time are extracted by the automatic extraction means 12 (Figure 8, step S4 and step S5). Here, the desired purchasing period indicated in D is 12:00 to 18:00, which is outside the limit time, and thus this data is excluded; and the sets of purchase condition data A, B, C and E and provision condition data a, b, c and d are extracted as shown in Figure 11.

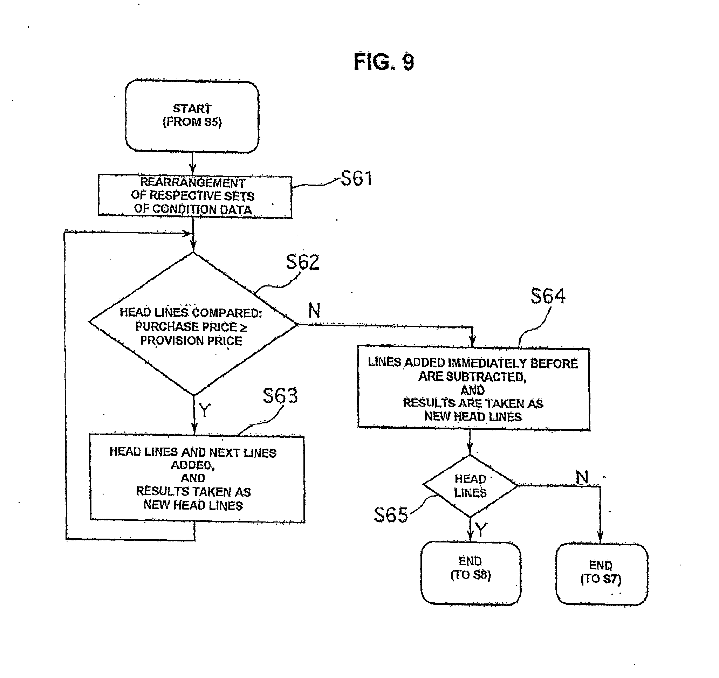

Next, providers X and consumers Y are combined by the matching means 13 (Figure 8, step S6). In the matching means 13, the above-described provision condition data and purchase condition data are compared, and the plurality of sets of condition data are matched so that the total amount of a plurality of purchase prices is equal to or greater than the total amount of the same number of provision prices. In other words, individual provision prices and purchase prices are combined even if these prices do not match. In this case, since there are a number of different methods of combination, it is necessary to select the method of combination. Accordingly, in the shown embodiment, a rearranging means 131, which first rearrange the respective extracted sets of condition data so that the provision condition data is rearranged in order from the lowest provision price and the purchase condition data is rearranged in order from the highest purchase price, is installed in the matching means 13. In concrete terms, as shown in Figure 12, the provision condition data is rearranged in the order a, c, b, d, and the purchase condition data is rearranged in the order A, E, C, B (Figure 9, step S61). Here, in cases where there are sets of data with the same prices, data with various conditions such as order of entry, etc. may be given priority. Furthermore, besides such rearranging means 131, it is also possible to install a means which sets the method of combination so that the greatest priority is given to obtaining the largest number of combinations via various priority conditions, or so that the greatest priority is given to the difference amount between the total amount of the provision prices and the total amount of the purchase prices.

Next, the provision price and the purchase price in the head lines of the respective sets of rearranged data are compared with each other (Figure 9, step S62); and if the purchase price is equal to or greater than the provision price, these head lines and the provision price and the purchase price of the next lines are respectively added together, and these total amounts are taken as the new head lines (Figure 9, step S63). In the case of the shown embodiment, 70,000 yen, which is the purchase price indicated by A, is greater than 58,000 yen, which is the provision price indicated by a; accordingly, for the purchase condition data, the purchase prices of A and E are totaled and taken as the new head line; and for the provision condition data, the provision prices of a and c are totaled and taken as the new head line. If the total amount of the provision prices becomes greater than the total amount of the purchase prices as a result of the repetition of this process, the lines added immediately before are subtracted, and the lines prior to the addition are taken as the head lines (Figure 9, step S64). While the respective sets of condition data contained in the lines taken as the head lines in this stage are processed by the transaction supporting means 14 and difference amount managing means 15, the respective sets of condition data that are not contained in the lines taken as the head lines are automatically added by the carry-over means 16 to the object of extraction by the automatic extraction means 12 when the next predetermined limit time is updated (Figure 8, step S7). In the shown embodiment, among the respective sets of condition data rearranged by the rearranging means 13, the total amount (196,000 yen) of the purchase prices up to the third lines (a, c and b, and A, E and C) is equal to or greater than the total amount (185,000 yen) of the provision prices; accordingly, matching is successfully completed for these sets of condition data. However, by the fourth lines, the total amount (253,000 yen) of the provision prices exceeds the total amount (246,000 yen) of the purchase prices; accordingly, matching is not successfully completed for the provision condition data d and purchase condition data B of the fourth lines (see Figure 13).

Furthermore, support is provided by the transaction supporting means 14 so that the selling and buying of the specific goods or services are performed between the providers X (a, c and b) and consumers Y (A, E and C) for which the combinations were determined, in accordance with the provision prices and purchase prices respectively submitted by the providers and consumers (Figure 8, step S8). In concrete terms, for example, a settling procedure is automatically performed by an accounting agent means 141 installed in the transaction supporting means 14, and shipping arrangements, etc. are also automatically made. In this case, in regard to the question of which providers X and which consumers Y are actually combined, a plurality of different ways of combining the providers and consumers (six different ways in the shown embodiment) are conceivable. Ordinarily, however, even in the case of the same goods or services, it may be predicted that goods or services for which a higher provision price is indicated are superior in terms of quality or service to goods or services for which a lower provision price is indicated. Accordingly, the system is designed so that providers X who have indicated higher provision prices and consumers Y who desire to purchase the goods or services at higher prices are combined. Concretely, in the case of the shown embodiment, b and A, c and E, and a and C, are combined as shown by the arrows in Figure 13.

Furthermore, the difference amount between the purchase prices and provision prices generated by these transactions are managed by the difference amount managing means 15 (Figure 8, step S9). Furthermore, this difference amount (11,000 yen in the shown embodiment, same below), the number of transactions completed (three sets) and the monetary amounts involved in the transactions completed (total provision prices: 185,000 yen, total purchase prices: 196,000 yen) (among the information relating to provision condition data and purchase condition data for which transactions were completed by the transaction supporting means 14 (in other words, for which matching was successfully completed)), the number of participants that were the object of matching by the matching means 13 (providers: 4, purchasers: 4, total: 8), and the participation fee (monetary amount obtained by multiplying the number of participants by a predetermined participation fee), etc. are accumulated as transaction information in the form of, for example, a table, etc. as shown in Figure 7 by the transaction information accumulating means 17 (Figure 8, step S10).

In this way, transaction information relating to a series of matching and transaction processing operations is accumulated for each of such series of operations; and when transactions for one day are completed, the transaction information for this day is transmitted from the transaction supporting server computer TS to the server computer SRV by the transaction information transmitting means 18 (Figure 8, step S11). Based upon items agreed to by the manager W and the transaction broker Z, at least one type of information such as the above-described difference amounts, number of transactions completed, monetary amounts involved in the transactions completed, number of participants, participation fee and number of transactions (number of times matching processing was performed in one day) is contained in the transaction information that is transmitted.

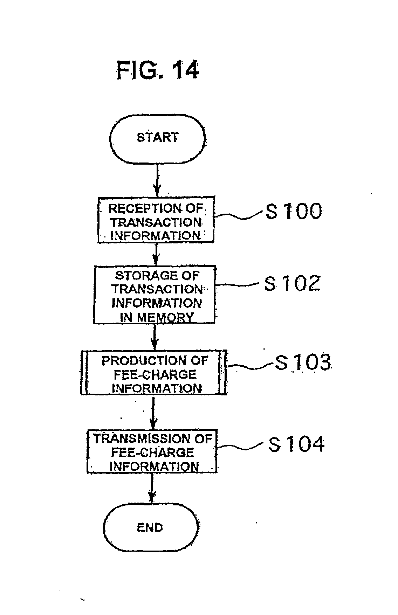

Meanwhile, in the server computer SRV in which the transaction information is received by the transaction information receiving means 1 (Figure 14, step S100), this transaction information is stored in memory for each transaction supporting server computer TS (Figure 14, step S101). For example, when a predetermined deadline such as the end of the month, etc. is reached, the data that has been stored for each transaction supporting server computer TS is tabulated, and the amount of the fee that is to be charged is calculated; furthermore, fee-charge information including the amount of the fee resulting from this calculation is produced (Figure 14, step S101).

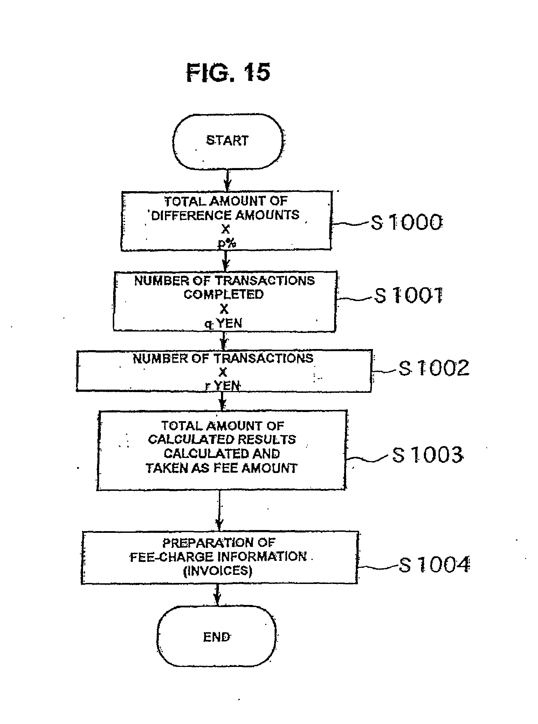

More concretely, in one example, in a case where the amount of the fee that is to be charged is "the total amount of p% of the difference amount, q yen for one set of completed transactions, and r yen for one transaction", then the difference amount, number of transactions completed and number of transactions are included in the transaction information that is received by the transaction information receiving means 1, and fee-charge information is produced in as follows based upon this information. Specifically, the "difference amount" is first extracted from the transaction information, and a value obtained by multiplying the total of the difference amounts for one month by p% is calculated (Figure 15, step S1000). Next, the "number of transactions completed" is extracted from the transaction information, and a value obtained by multiplying the total number of transactions completed in one month by q yen is calculated (Figure 15, step S1001). Furthermore, the "number of transactions" is extracted from the transaction information, and a value obtained by multiplying the number of transactions for one month by r yen is calculated (Figure 15, step S1002). The order of the calculations is not limited to this order, and alterations are possible. Moreover, the total amount of the results of these calculations is calculated, and the result is taken as the amount of the fee that is to be charged (Figure 15, step S1003). Furthermore, specific written invoices are prepared as fee-charge information based upon the fee amount thus calculated (Figure 15, step S1004), and the invoices constituting this fee-charge information are transmitted by e-mail, etc. to the corresponding transaction supporting server computers TS (Figure 14, step S104). In this way, fee-charge corresponding to the amount of use can be performed as use fees for the transaction supporting server computers TS or programs used in these computers.

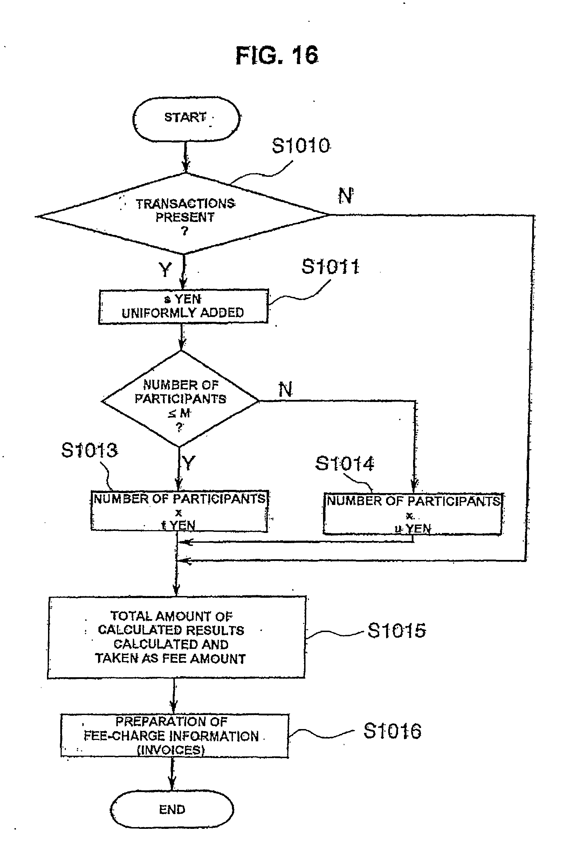

In cases where an alteration is made from the above-described content so that the content of the agreement between the manager W and the transaction broker Z is such that "the total amount of a uniform s yen for transactions regardless of the number of transactions, t yen for each participant up to m participants, and u yen for each participant exceeding m participants" is taken as the amount of the fee that is to be charged, fee-charge information is produced as follows: The "number of transactions" is first extracted from the transaction information (Figure 16, step S1010); and in cases where there is a number of transactions (integer of 1 or greater), an amount of s yen is uniformly added (Figure 16, step S1011). Furthermore, the "number of participants" is extracted from the transaction information, and this number of participants is compared with m, which is a stipulated number (Figure 16, step S 1012). If the number of participants is equal to or less than m, a value obtained by multiplying the number of participants by t yen is calculated (Figure 16, step S1013), while if the number of participants exceeds m, a value obtained by multiplying the number of participants by u yen is calculated (Figure 16, step S1014). Furthermore, the total amount of these calculated results is calculated, and the result is taken as the amount of the fee that is to be charged (Figure 15, step S1003). Furthermore, specific written invoices are prepared as fee-charge information based upon the calculated amount of the fee that is to be charged (Figure 15, step S1004). Here, furthermore, in cases where the number of transactions (number of times that matching is performed) is 0, then the amount of the fee that is to be charged is 0, except for the basic fee, etc., which is separately invoiced. Afterward, the invoices constituting the fee-charge information are transmitted to the corresponding transaction supporting server computers TS (Figure 14, step S014) in the same manner as described above. In this way, a fixed fee can be set for the number of transactions involved in the transactions, and fees can be charged in accordance with the amount of use in regard to the number of participants.

In addition to the above systems, the question of which information is used to produce fee-charge information, and how this information is utilized, can be settled in various ways by mutual agreement as necessary.

Furthermore, the difference amounts generated as a result of the completion of transactions, or the monetary amounts that remain when the portions determined by fee-charge processing have been subtracted from these difference amounts, can be used in various ways, e.g., for operating costs of the transaction supporting system, etc.

In the embodiment described above, when a utilization fee for the transaction supporting server computer TS or the program that is used to support transactions by operating this computer in commercial transactions conducted via the transaction supporting server computer TS is charged, there is no need for the transaction broker Z to disclose any concrete information concerning the contents of transactions, e.g., detailed information such as attributes of the broker's customers, etc., information indicative of the kinds of goods or services actually involved in the transactions, or information indicative of which customers have conducted which transactions, etc.; and only transaction information required for the charge of fees need be transmitted to the server computer SRV. Accordingly, operations can be conducted with confidence, without any danger that the operation of the transaction marketplace will be hindered. Meanwhile, the manager W who manages the server computer SRV can perform fee-charge processing by handling only transaction information that is truly necessary for fee-charge, and that contains no unnecessary information; accordingly, an appropriate profit can be quickly and accurately obtained without placing an excessive burden on the server computer SRV, and the danger of unfair alteration of the transmitted transaction information by the transaction broker Z can be prevented. In particular, the transaction supporting server computer TS and the programs used to operate this computer can be provided to the transaction broker Z by the manager W in the form of a rental or lease, etc.; accordingly, the transaction broker Z can reduce the cost and labor involved in the maintenance of his own hardware and software; and at the same time, handling in cases where the transaction information necessary for fee-charge processing is altered is facilitated for the manager W. Moreover, since fee-charge processing can be performed in correspondence with each transaction supporting server computer TS, the performance of fee-charge processing individually for each transaction supporting server computer TS is facilitated even if transaction supporting server computers TS and programs are supplied to a plurality of transaction brokers Z.

Furthermore, the transaction supporting server computer TS of the shown embodiment is designed so that a plurality of providers X and a plurality of consumers Y can be simultaneously allowed to participate in transactions for goods and services, and so that transactions can be completed at the submitted prices even in cases where the respectively submitted prices do not agree. Accordingly the existing concept of conventional bidding systems or auction systems, i.e., the concept that a transaction can be completed only when the prices of the sellers and buyers agree (of course, there may be cases in which a fixed broker's fee is charged), is completely overturned, so that the difficulty and rarity of completing transactions (a drawback of conventional auction systems) is eliminated, thus allowing the prospect of completing an even greater number of transactions. As a result, transactions are completed at the provision prices submitted by the providers X themselves, and at the purchase prices submitted by the consumers Y themselves, so that lingering dissatisfaction with respect to the providers and consumers can be eliminated. Furthermore, in regard to the difference amounts between the provision prices and purchase prices generated as a result of the completion of transactions, a portion of these difference amounts can be made an object of fee-charge or used to defray operating costs, etc., so that various utilization methods can be adopted. Furthermore, in the case of this transaction supporting server computer TS, a double closed system is used; accordingly, excessive competition, which is another drawback of auction systems, can be effectively suppressed.

In the shown embodiment, various modifications other than the features described above are possible. For example, the fee-charge information output means 4 can also be designed as a means that outputs the fee-charge information produced by the fee-charge information producing means 3 to a printer that is a peripheral device of the server computer SRV, so that this information is printed on paper in the form of invoices. In this case, the printed invoice papers are sent by mail or facsimile transmission, etc. from the manager W to the respective transaction brokers Z using the respective transaction supporting server computers TS.

Furthermore, besides a system in which respective sets of condition data that could not be successfully matched by the matching means 13 in the transaction supporting server computer TS are immediately processed by the carry-over means 16, it is also possible to design the system so that re-matching is attempted for sets of data that could not be successfully matched, in order to complete a greater number of transactions. More specifically, in the case of provision condition data and purchase condition data that could not be successfully matched, the total amount of the provision prices at that point in time is greater than the total amount of the purchase prices; accordingly, a means can be established so that at least these prices agree with each other, or so that the purchase prices are higher. For this purpose, various methods are conceivable. For instance, in concrete terms, a method in which providers X and consumers Y who could not be matched are informed of the average amounts of provision prices and purchase prices that were successfully matched by the matching means 13, and these providers and consumers are urged to readjust the prices in order to cause a closing of the price gap can be used. Also, a method in which the respective parties are caused to submit desired preferred transaction prices beforehand and are caused to submit a desired latitude in the transaction prices (permissible prices), and re-matching using the permissible prices is performed in cases where matching could not be successfully achieved as a result of first performing matching at the preferred transaction prices, etc. can be used.

In addition, in regard to the form of the transactions, besides the double closed auction system, it is also possible to use an auction system in which providers and purchasers whose provision prices and purchase prices agree are matched one-on-one as in conventional systems, or a so-called reverse auction system, and common commercial transaction forms other than these various types of auction systems can be used if necessary.

Furthermore, the concrete constructions of the respective elements are not limited to those of the above-described embodiment; and various modifications are possible within limits that involved no departure from the spirit of the present invention.

### Industrial Applicability

As described above in detail, the present invention makes it possible to perform ideal fee-charge in regard to charges for utilizing all or part of the software used for transactions in the form of ASP, etc. or for utilizing computers in which such software is installed, in various types of commercial transactions performed using computers. In this case, only information relating to such transactions that is necessary for fee-charge (from which information whose leakage to the outside would cause problems for the persons utilizing the transaction supporting devices constituting these computers, such as transaction brokers or the like, has been removed) need be transmitted from the transaction supporting devices. Accordingly, transaction supporting devices can be appropriately utilized without causing any problems or the operation of the transactions. Meanwhile, in the fee-charge processing device, since fee-charge processing is performed by receiving only transaction information that is truly necessary (from which unnecessary information has been removed), an appropriate profit can be quickly and accurately obtained by the provider of the software (all or part of this software) or the transaction supporting device constituting the computer in which this software is installed, and the separate application of individual fee-charge methods is also facilitated in cases where transmission and reception are performed with a plurality of transaction supporting devices.

In particular, in the case of an auction system using a transaction supporting device that matches sellers and buyers even in cases where the prices of the sellers and buyers do not agree, difference amounts are generated in the transactions that are completed. However, these difference amounts can be used as one type of transaction information that is used for fee-charge. Moreover, the number of participants in transactions conducted by the transaction supporting device, the participation fee, the number of transactions, the number of transactions completed, or the monetary amounts involved in the completed transactions, or combinations of these types of information, can be utilized as transaction information that does not cause problems for transaction brokers or the like even if known by outside parties, not just in such auction systems, but also more widely in commercial transactions in general.

Furthermore, by way of designing the system so that transaction information is transmitted and received between the transaction supporting device and the fee-charge processing device by predetermined deadlines or for predetermined periods, fee-charge processing is performed quickly and smoothly; moreover, if such transmission and reception are performed automatically, unfair practices in the reception of such information can also be prevented.

## Claims

1. A fee-charge processing device which allows communications with a transaction supporting device used to support completion of transactions involving goods or services, said fee-charge processing device comprising:
a receiving means for receiving from said transaction supporting device transaction information from which at least transaction content information indicative of concrete contents of transactions performed using said transaction supporting device has been removed,
a memory means for storing said transaction information received by said receiving means, and
a fee-charge information producing means for producing fee-charge information including an amount of fee that is to be charged based upon said transaction information stored by said memory means.

2. The fee-charge processing device according to Claim 1, wherein said fee-charge information producing means produces fee-charge information peculiar to said transaction supporting device in accordance with transaction conditions in said transaction supporting device.

3. The fee-charge processing device according to Claim 1 or 2, further comprising a fee-charge information output means for outputting fee-charge information produced by said fee-charge information producing means.

4. The fee-charge processing device according to any one of Claims 1 through 3, wherein said receiving means is a means that receives said transaction information by a predetermined deadline or for a predetermined period.

5. The fee-charge processing device according to any one of Claims 1 through 4, wherein said transaction information includes at least one type of information selected from the group consisting of the number of participants in transactions conducted by said transaction supporting device, the participation fee, the number of transactions, the number of transactions completed, and the monetary amount involved in transactions completed.

6. The fee-charge processing device according to any one of Claims 1 through 4, wherein
said transaction information includes at least one type of information selected from the group consisting of the difference amounts generated by provision prices and purchase prices indicated by providers and consumers that were successfully matched by said transaction supporting device, the number of participants in transactions performed by said transaction supporting device, the participation fee, the number of transactions, the number of transactions completed and the monetary amounts involved in the transactions completed,
in cases where said transaction supporting device matches providers who respectively desire to provide a plurality of goods or services and who have submitted provision prices, and consumers, who desire to purchase said goods or services and who have submitted purchase prices, even in cases where said submitted prices do not agree.

7. A transaction supporting device which can communicate with the fee-charge processing device according to any one of Claims 1 through 6, said transaction supporting device comprising:
a transaction supporting means for supporting completion of transactions that involves goods or services, and
a transmitting means for transmitting transaction information from which at least transaction content information indicative of concrete contents of transactions conducted in said transaction supporting means have been excluded.

8. The transaction supporting device according to Claim 7, wherein said transaction information includes at least one type of information selected from the group consisting of the number of participants in transactions conducted by said transaction supporting device, the participation fee, the number of transactions, the number of transactions completed, and the monetary amount involved in transactions completed.

9. The transaction supporting device according to Claim 7, further comprising:
a matching means for matching providers, who respectively desire to provide a plurality of goods or services and have submitted provision prices, and consumers, who desire to purchase said goods or services and have submitted purchase prices, even in cases where said submitted prices disagree,
wherein said transaction supporting means performs processing to complete transactions between said providers and consumers matched by said matching means at respective submitted prices, and said transaction information includes at least one type of information selected from the group consisting of the difference amounts generated by provision prices and purchase prices indicated by providers and consumers that were successfully matched by said transaction supporting device, the number of participants in transactions performed by said transaction supporting device, the participation fee, the number of transactions, the number of transactions completed and the monetary amounts involved in transactions completed.

10. The fee-charge processing device according to any one of Claims 7 through 9, wherein said transmitting means transmits said transaction information by a predetermined deadline or for a predetermined period.

11. A fee-charge processing method comprising:
a receiving step that receives transaction information from which at least transaction content information indicative of concrete transaction contents of transactions involving goods or services have been removed,
a storing step that store said transaction information received in said receiving step, and
a producing step that produces fee-charge information including an amount of fee that is to be charged based upon said transaction information stored in said storing step.

12. A transaction supporting method comprising:
a transaction supporting step that supports completion of transactions that involves goods or services, and
a transmitting step that transmits transaction information from which at least transaction content information indicative of concrete transaction contents of transactions performed in said transaction supporting step has been removed.
